Europäisches Patentamt

European Patent Office

Office européen des brevets

(11) Publication number: **0 236 027**
**A1**

## (12) EUROPEAN PATENT APPLICATION

(21) Application number: **87301494.8**

(22) Date of filing: **20.02.87**

(51) Int. Cl.⁴: **F 16 D 55/14**

(30) Priority: **01.03.86 GB 8605134**

(43) Date of publication of application:
**09.09.87 Bulletin 87/37**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Price, Anthony George**
**14 Meadow Lane Croeseyceiliog**
**Cwmbran Gwent NP44 2EY (GB)**

**Campbell, Roy**
**The Corner House 1 Marlbrook Lane**
**Licky Rock Bromsgrove Worcestershire (GB)**

(74) Representative: **Spall, Christopher John et al**
**BARKER, BRETTELL & DUNCAN 138 Hagley Road**
**Edgbaston Birmingham B16 9PW (GB)**

(54) Improvements in self-energising disc brakes.

(57) In a disc brakes of the spreading type the pressure plates (4, 5) are movable in opposite directions to increase their axial separation by means of a wedge member (11) of segmental outline of which the inwardly convergent end edges (12, 13) act to separate an adjuster pair of balls (7). The member (11) has an outer arcuate bearing face (14) lying on the arc of a circle which is concentric with a circle containing the arc of movement of the pressure plates, and the wedge member (11) is movable in a radially inwards direction by means of an adjuster member (15) or a brake applying member (21) which extends through the wall of the housing (3) and acts on the bearing face (14).

**Description**

## IMPROVEMENTS IN SELF-ENERGISING DISC BRAKES

This invention relates to self-energising disc brakes of the kind in which rotatable friction discs provided with friction linings are adapted to be brought into engagement with spaced opposed braking surfaces in a housing by pressure plates located between the friction discs and centred by stationary pilot lugs, application of the brake being initiated by angular movement of the pressure plates in opposite directions effected by operation of a brake-applying mechanism, and through which a brake-applying force is applied to the plates, balls or rollers being located in co-operating oppositely inclined recesses in the adjacent faces of the pressure plates defining camming means such that on operation of the brake-applying mechanism to move the pressure plates angularly in opposite directions, the engagement of the balls or rollers and the recesses causes the pressure plates to move apart into engagement with the friction discs which are urged into engagement with the braking surfaces, the pressure plates being carried round with the friction discs until one is arrested by the engagement of a lug on the plate with a drag-taking stop abutment in the housing and the continued angular movement of the other pressure plate provides a servo action.

Self-energising brakes of the kind set forth are commonly used in tractors and like vehicles.

Known brakes of the kind set forth may be applied hydraulically for normal service braking, conveniently by means of an hydraulic actuator acting between the pressure plates, and mechanically for parking or in an emergency, conveniently by the application of a radially directed force to the outer ends of a pair of toggle links pivotally connected to radially projecting lugs on the plates.

When the brake is applied any tendency for the vehicle to roll backwards will cause the pressure plates to move angularly together as an assembly with the arrested lug moving away from the stop abutment until an equivalent lug on the other plate engages with the stop abutment.

There is a tendency to increase the brake-applying force to counteract this movement but due to the geometry of the brake, the required brake-applying travel increases progressively up to a point substantially mid-way between the two effective abutment positions.

When the brake is applied hydraulically, with the hydraulic actuator acting through toggle links, this additional travel is accommodated by displacement of the foot. Also, when the brake is applied mechanically, the force necessary to apply the brake substantially at the mid-point cannot be reduced effectively when the plates approach the opposite abutment. Thus there is a danger of the brake being over-applied with the consequent risk of damage to components.

The danger of "over-application" is caused by a discrepency between the arc described by the plates as they change abutments, and the arc of movement of the pivotal connections between the toggle links and the lugs on the plates.

There is also, therefore, a danger of the brake being "over-adjusted" when an adjuster for the brake co-operates with the toggle links.

According to our invention in a brake of the kind set forth the pressure plates are adapted to be urged angularly in opposite directions to increase the axial separation of the plates by means of a device having an arcuate bearing face lying on the arc of a circle which is concentric with the circle containing the arc of movement of the pressure plates, in combination with means for applying a force to the bearing face in a direction normal to that face.

By transmitting a force to the plates through the arcuate bearing face ensures that the reaction from the plate will remain constant should the plates change abutments as described above.

The device may comprise any suitable means for achieving relative angular movement between the plates in opposite directions. Conveniently, however, the device is adapted to cause movement in opposite directions of a pair of adjacent balls or rollers which are located in co-operating oppositely inclined recesses in adjacent faces of the plates, in turn to cause an equivalent relative movement of the pressure plates.

Preferably the two balls or rollers comprise two of the balls or rollers which constitute the camming means.

The device may comprise a wedge member, substantially of segmental outline of which the inwardly convergent end edge acts to separate the balls or rollers, as the wedge member is urged inwardly in a generally radial direction in response to the force acting on the circumferentially extending arcuate outer edge.

The means for applying the force to the bearing face may comprise an adjuster member, or a brake-applying member for applying the brake mechanically, either for parking or in an emergency. In either case the means incorporates a thrust member which co-operates with the arcuate bearing face and is movable in a radial direction.

When an adjuster member is provided, the adjuster member is sealingly screwed adjustably through a screw-threaded radial opening in the wall of the housing.

When a brake-applying member is provided, the member has a fast-screw-threaded engagement in a sleeve in a radial opening in the wall of the housing in which it is rotatable by means of an external lever.

Two embodiments of our invention are illustrated in the accompanying drawings in which:-

Figure 1 is an end elevation of a portion of a disc brake of the kind set forth;

Figure 2 is a section on the line 2-2 of Figure 1; and

Figure 3 is a view similar to Figure 1 but showing a modification.

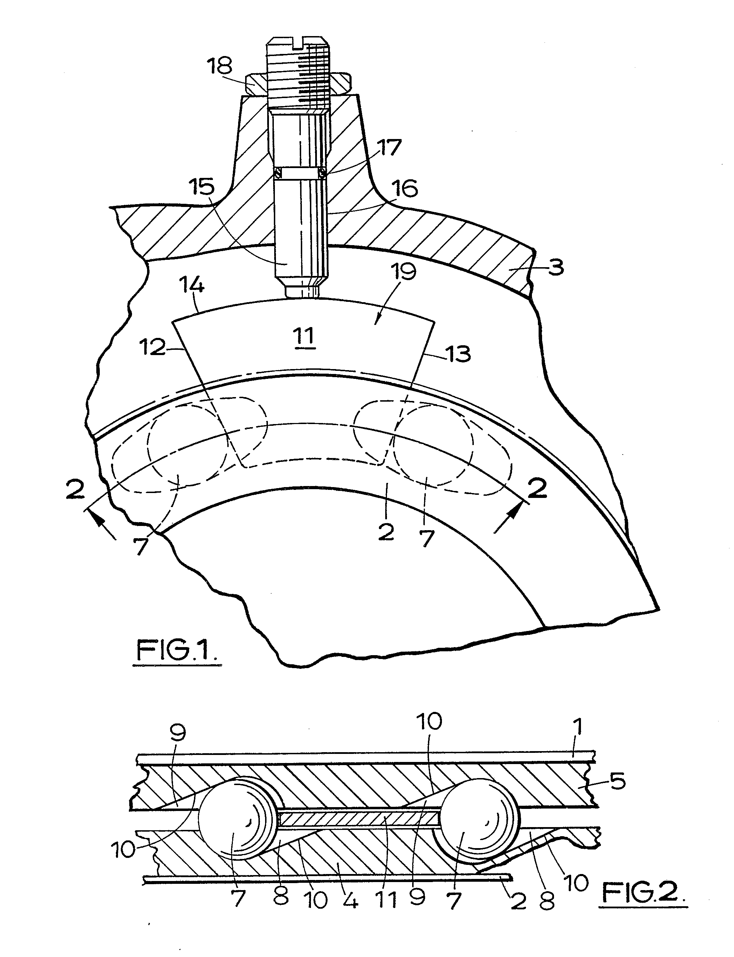

A brake of the spreading type 1 illustrated in Figures 1 and 2 of the drawings comprises a pair of rotatable friction discs 1, 2 provided on opposite sides with linings of friction material which are adapted to be brought into engagement with spaced opposed radial surfaces in a housing 3 by pressure plates 4, 5 located between the discs and centred by three angularly spaced stationary pilots (not shown). Angularly spaced balls or rollers 7 are located in co-operating angularly spaced oppositely inclined recesses 8, 9 in adjacent faces of the pressure plates which lie on a pitch circle of constant diameter.

The application of the brake is initiated by moving the pressure plates 4, 5, angularly in opposite directions which causes the pressure plates to move axially relatively away from each other due to the tendency for the balls or rollers 7, to ride up ramps 10 defined by the end faces of the recesses. This urges the friction discs 1, 2 into engagement with the braking faces in the housing. The pressure plates 4, 5 are then carried round with the discs until one is arrested by the engagement of a lug on a respective plate with a drag-taking abutment in the housing, whereafter continued angular movement of the other plate provides a servo action.

The brake of Figures 1 and 2 is applied mechanically for parking or in an emergency by any conveniently known means.

For normal service braking the brake may be applied hydraulically by an hydraulic actuator which acts between lugs on the respective pressure plates 4, 5.

The brake is provided with a mechanically-operable slack adjuster 19. As illustrated the slack adjuster comprises a freely floating wedge 11 of generally segmental outline which is disposed between the two plates 4, 5 and of which inwardly convergent end edges 12, 13 engage between an adjacent pair of the balls 7. The circumferentially extending outer arcuate edge 14 lies on a circle concentric with the axis of the plates. A thrust member 15 projects into the brake through a radial opening 16 in the housing 3 and at its inner end acts on the edge 14 in a direction normal to the axis of the brake. The thrust member 15 is sealed in the opening by a seal 17, and has an adjustable screw-threaded engagement in the opening 16. A lock nut 18 acts between the thrust member 15 and the housing 3 to lock the thrust member 15 against rotation.

To adjust the brake to compensate for wear of the piston linings, the lock nut 18 is first slackened, whereafter the thrust member 15 can be screwed relatively into the brake. This, in turn, urges the wedge 11 inwardly to cause the edges 12, 13 to urge the balls 7 in opposite directions, in turn, through co-operation with ramps 10, to urge the plates 4 and 5 relative to each other, both angularly and axially. This therefore reduces the braking clearances.

After adjustment has been effected, the lock nut 18 is re-tightened.

The arcuate bearing face 14 slides relative to the inner end of the thrust member 15 as the plates 4, 5 move angularly when the brake is applied or when the plates 4, 5 change abutments, as described above, without increasing or otherwise altering the magnitude of the thrust applied to the wedge by the member 15.

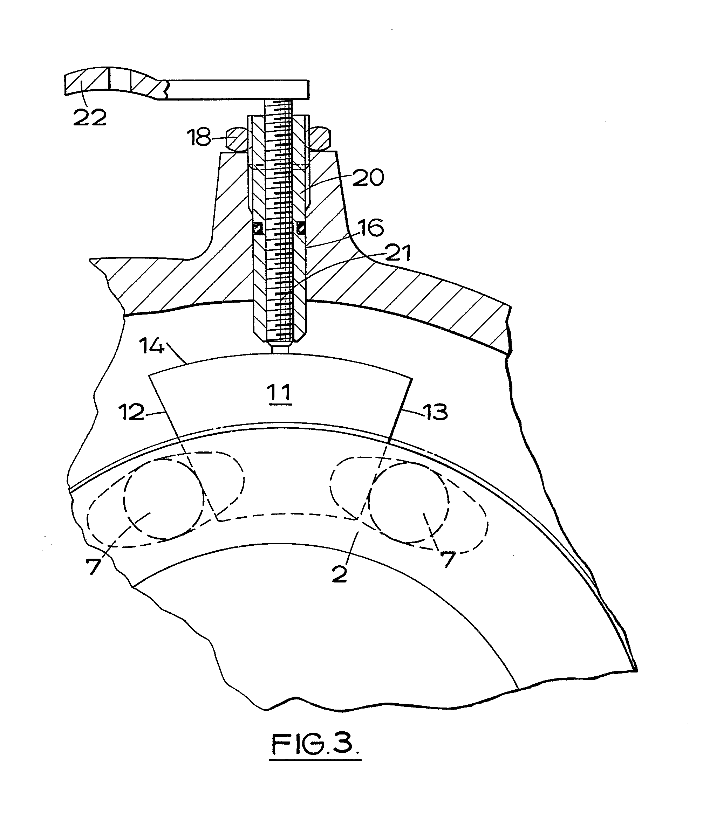

In the modified construction illustrated in Figure 3 the thrust member 15 is replaced by a sleeve 20 which is screw-threadably received in the radial bore 16 and is locked against rotation by the lock nut 18. The sleeve 20 has an internal fast thread, and a brake-applying member 21 in screw-threaded engagement with the fast thread acts at its inner end on the arcuate edge 14 of the wedge 11. A brake-applying lever 22 is fast with the outer end of the member 21.

To apply the brake manually, for parking or in an emergency, the lever 22 is moved angularly in a plane parallel to the axis of the disc to rotate the member 21 which, in turn, imparts a thrust to the wedge 11 in a radially inwards direction. The wedge 11 separates the two balls 7 to move the pressure plates 4, 5 angularly and axially and initiate application of the brake as described above.

As in the embodiment of Figures 1 and 2, the arcuate bearing face 14 ensures that the magnitude of the thrust applied by the member 21 will remain constant should the plates 4, 5 change abutment as described above.

## Claims

1. A self-energising disc brake in which rotatable friction discs (1, 2) provided with friction linings are adapted to be brought into engagement with spaced opposed braking surfaces in a housing (3) by pressure plates (4, 5) located between the friction discs and centred by stationary pilot lugs, application of the brake being initiated by angular movement of the pressure plates (4, 5) in opposite directions effected by operation of a brake-applying mechanism, and through which a brake-applying force is applied to the plates, balls or rollers (7) being located in co-operating oppositely inclined recesses (8, 9) in the adjacent faces of the pressure plates defining camming means such that on operation of the brake-applying mechanism to move the pressure plates angularly in opposite directions, the engagement of the balls or rollers (7) and the recesses (8, 9) causes the pressure plates to move apart into engagement with the friction discs which are urged into engagement with the braking surfaces, the pressure plates being carried round with the friction discs until one is arrested by the engagement of a lug on the plate with a drag-taking stop abutment in the housing and the continued angular movement of the other pressure plate provides a servo action, characterised in that the pressure plates (4, 5) are adapted to be urged angularly in opposite directions to increase the axial separation of the plates by means of a device having an arcuate bearing face (14) lying on the arc of a circle which is concentric with the circle containing the arc of movement of the pressure plates (4, 5), in combination with means (15, 21) for applying a force to the bearing face (14) in a direction normal to that face.

2. A disc brake according to claim 1 characterised in that the device is adapted to cause relative movement in opposite directions of a pair of adjacent balls or rollers (7) which are located in co-operating oppositely inclined recesses (8, 9) in adjacent faces of the plates, the movement of the pair of balls in turn causing an equivalent relative movement of the pressure plates.

3. A disc brake according to claim 2 characterised in that the pair of balls or rollers (7) which the device is adapted to move in opposite directions are two of the balls or rollers (7) which constitute the camming means.

4. A disc brake according to claim 2 or claim 3 characterised in that the device comprises a wedge member (11) of substantially segmental outline having an inwardly convergent end which acts to separate the two balls or rollers as the wedge member is urged inwardly in a generally radial direction in response to the force acting on the circumferentially extending bearing face (14).

5. A disc brake according to any preceding claim characterised in that the means for applying the force to the bearing face (14) comprises an adjuster member (19).

6. A disc brake according to claim 5 characterised in that the adjuster member (19) is sealingly screwed adjustably through a screw-threaded radial opening (16) in the wall of the housing (3).

7. A disc brake according to any one of claims 1 to 4 characterised in that the means for applying the force to the bearing face (14) comprises a brake-applying member (21).

8. A disc brake according to claim 7 characterised in that the brake-applying member (21) has a fast screw-threaded engagement in a sleeve (20) in a radial opening (16) in the wall of the housing (3) in which it is rotatable by means of an external lever (22).

9. A disc brake according to claim 8 characterised in that the sleeve (20) is sealably mounted in the radial opening (16).

10. A disc brake according to any preceding claim characterised in that the means for applying the force to the bearing face (14) incorporates a thrust member (15, 21) which co-operates with the arcuate bearing face (14) and is movable in a radial direction.

FIG.1.

FIG.2.

0236027

FIG.3.

European Patent Office

# EUROPEAN SEARCH REPORT

Application number

EP 87 30 1494

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 986 525 (LAMBERT BRAKE CORP.) * The whole document; figures 1-10 * | 1 | F 16 D 55/14 |
| | --- | | |
| A | US-A-2 633 941 (ZINDLER) * The whole document; figures 1-6 * | 1 | |
| | --- | | |
| A | GB-A- 911 838 (LAMBERT BRAKE CORP.) | | |
| | --- | | |
| A | US-A-2 883 008 (LUCKER) | | |
| | --- | | TECHNICAL FIELDS SEARCHED (Int. Cl.4) |
| A | CH-A- 317 603 (KLAUE) | | |
| | --- | | F 16 D 55/00 |
| A | US-A-3 677 375 (WOLF) | | |
| | --- | | |
| A | US-A-3 167 156 (DAVIS) | | |
| | --- | | |
| A,P | EP-A-0 190 828 (LUCAS INDUSTRIES PUBLIC LTD. CO.) | | |
| | ---            -/- | | |

The present search report has been drawn up for all claims

| Place of search | Date of completion of the search | Examiner |
|---|---|---|
| THE HAGUE | 05-06-1987 | BRAEMS C.G.I. |

| | **DOCUMENTS CONSIDERED TO BE RELEVANT** | | | Page  2 |
|---|---|---|---|---|
| Category | Citation of document with indication, where appropriate, of relevant passages | | Relevant to claim | CLASSIFICATION OF THE APPLICATION (Int. Cl.4) |
| A,P | FR-A-2 583 842  (LUCAS INDUSTRIES PUBLIC LTD. CO.)   ----- | | | |
| | | | | **TECHNICAL FIELDS SEARCHED (Int. Cl.4)** |
| | The present search report has been drawn up for all claims | | | |

| Place of search | Date of completion of the search | Examiner |
|---|---|---|
| THE HAGUE | 05-06-1987 | BRAEMS C.G.I. |